# EUROPÄISCHE PATENTANMELDUNG

(11) **EP 4 443 688 A1**
(43) Veröffentlichungstag der Anmeldung: **09.10.2024**
(21) Anmeldenummer: 23166773.4
(22) Anmeldetag: 05.04.2023
(51) Int. Cl.: H02J 3/14, H02J 3/32

(54) **KOSTENEFFIZIENTER BETRIEB EINER ANLAGE DER STAHLINDUSTRIE UND WEITERER TEILSYSTEME EINES GESAMTSYSTEMS**

(71) Anmelder: Primetals Technologies Germany GmbH, 91058 Erlangen (DE)
(72) Erfinder: Weinzierl, Klaus, 90480 Nürnberg (DE)
(74) Vertreter: Metals@Linz

(57) **Zusammenfassung**

Ein Gesamtsystem umfasst als ein Teilsystem einen elektrischen Energiespeicher (6) und weitere Teilsysteme, zumindest eine Anlage (1) der Stahlindustrie. Die Teilsysteme (1, 4, 6) sind zur Übertragung elektrischer Energie direkt oder indirekt miteinander und mit einem elektrischen Versorgungsnetz (2) verbunden. Einer Steuereinrichtung (7) sind aktuelle Zustände (Z1, Z4, Z6) der Teilsysteme (1, 4, 6) sowie, bezogen auf einen ersten Zeithorizont (T1), ein geplanter erster Bezug (E2) an elektrischer Energie aus dem Versorgungsnetz (2) und geplante erste Betriebsweisen (B1, B4) der weiteren Teilsysteme (1, 4) bekannt. Die Steuereinrichtung (7) ermittelt basierend auf dem geplanten ersten Bezug (E2) und den geplanten ersten Betriebsweisen (B1, B4) einen auf das Ende des ersten Zeithorizonts (T1) bezogenen erwarteten Endzustand (Z6') des elektrischen Energiespeichers (6). Die Steuereinrichtung (7) legt unter Berücksichtigung des erwarteten Endzustands (Z6') des elektrischen Energiespeichers (6) und der Steuereinrichtung (7) bekannter, für einen sich an den ersten Zeithorizont (T1) unmittelbar anschließenden zweiten Zeithorizont (T2) geplanter zweiter Betriebsweisen (B1', B4') der weiteren Teilsysteme (1, 4) einen geplanten zweiten Bezug (E2') an elektrischer Energie fest. Die Steuereinrichtung (7) betreibt die weiteren Teilsysteme (1, 4) während der beiden Zeithorizonte (T1, T2) basierend auf den geplanten ersten und zweiten Betriebsweisen (B1, B4, B1', B4') und bezieht hierbei aus dem Versorgungsnetz (2) elektrische Energie gemäß des geplanten ersten und des festgelegten zweiten Bezugs (E2, E2') an elektrischer Energie.

## Beschreibung

### Gebiet der Technik

Die vorliegende Erfindung geht aus von einem Betriebsverfahren für ein Gesamtsystem,
- wobei das Gesamtsystem als ein Teilsystem einen elektrischen Energiespeicher und weitere Teilsysteme umfasst,
- wobei die weiteren Teilsysteme eine Anlage der Stahlindustrie umfassen,
- wobei die Anlage der Stahlindustrie und der elektrische Energiespeicher zur Übertragung elektrischer Energie direkt oder indirekt miteinander und mit einem elektrischen Versorgungsnetz verbunden sind,
- wobei einer das Gesamtsystem steuernden Steuereinrichtung aktuelle Zustände der Teilsysteme bekannt sind.

Die vorliegende Erfindung geht weiterhin aus von einem Steuerprogramm für eine Steuereinrichtung für ein Gesamtsystem,
- wobei das Gesamtsystem als ein Teilsystem einen elektrischen Energiespeicher und weitere Teilsysteme umfasst,
- wobei die weiteren Teilsysteme eine Anlage der Stahlindustrie umfassen,
- wobei die Anlage der Stahlindustrie und der elektrische Energiespeicher zur Übertragung elektrischer Energie direkt oder indirekt miteinander und mit einem elektrischen Versorgungsnetz verbunden sind,
- wobei das Steuerprogramm Maschinencode umfasst, der von der Steuereinrichtung abarbeitbar ist,
- wobei die Abarbeitung des Maschinencodes durch die Steuereinrichtung bewirkt, dass die Steuereinrichtung das Gesamtsystem gemäß einem derartigen Betriebsverfahren steuert.

Die vorliegende Erfindung geht weiterhin aus von einer Steuereinrichtung für ein Gesamtsystem,
- wobei das Gesamtsystem als ein Teilsystem einen elektrischen Energiespeicher und weitere Teilsysteme umfasst,
- wobei die weiteren Teilsysteme eine Anlage der Stahlindustrie umfassen,
- wobei die Anlage der Stahlindustrie und der elektrische Energiespeicher zur Übertragung elektrischer Energie direkt oder indirekt miteinander und mit einem elektrischen Versorgungsnetz verbunden sind,
- wobei die Steuereinrichtung mit einem derartigen Steuerprogramm programmiert ist, so dass die Steuereinrichtung bei Abarbeitung des Maschinencodes des Steuerprogramms das Gesamtsystem gemäß einem derartigen Betriebsverfahren steuert.

Die vorliegende Erfindung geht weiterhin aus von einem Gesamtsystem,
- wobei das Gesamtsystem als ein Teilsystem einen elektrischen Energiespeicher und weitere Teilsysteme umfasst,
- wobei die weiteren Teilsysteme eine Anlage der Stahlindustrie umfassen,
- wobei die Anlage der Stahlindustrie und der elektrische Energiespeicher zur Übertragung elektrischer Energie direkt oder indirekt miteinander und mit einem elektrischen Versorgungsnetz verbunden sind,
- wobei das Gesamtsystem eine derartige Steuereinrichtung umfasst, die bei Abarbeitung des Maschinencodes eines derartigen Steuerprogramms das Gesamtsystem gemäß einem derartigen Betriebsverfahren steuert.

### Stand der Technik

Die genannten Gegenstände sind beispielsweise aus dem Aufsatz "Grüne Energieversorgung der Stahlindustrie", Stahl und Eisen, August 2022, Seiten 22 bis 24 bekannt.

Aus der KR 2019 0136300 A ist ein industrieller Prozess bekannt, dem ein Energiespeicher zugeordnet ist. Der industrielle Prozess kann ein mehr oder minder komplexer technischer Prozess sein, der mehrere aufeinander aufbauende und miteinander zusammenwirkende Teilprozesse umfasst. Der industrielle Prozess weist verschiedene Arten von Lasten auf, nämlich Lasten, die stets mit Energie versorgt werden müssen, Lasten, die abgeschaltet werden können, und Lasten, bei denen der Energieverbrauch einstellbar ist. Es wird der tatsächliche Energieverbrauch der verschiedenen Komponenten der industriellen Anlage bestimmt. Der Betrieb der industriellen Anlage und des Energiespeichers werden derart aufeinander abgestimmt, dass sich minimale Kosten ergeben.

Aus der US 10 354 297 B2 ist eine Anordnung mit einem häuslichen Verbraucher, einem Energieerzeuger und einem Energiespeicher bekannt. Der Betrieb des Energiespeichers kann unter Berücksichtigung eines geplanten Energieverbrauchs des Verbrauchers ermittelt werden. Weiterhin können auch Wetterdaten mit verwertet werden. Auch können Preisinformationen für das Beziehen elektrische Energie aus einem Versorgungsnetz und für das Einspeisen elektrischer Energie in das Versorgungsnetz berücksichtigt werden.

Aus der TW 201 235 124 A ist bekannt, dass der Energieverbrauch einer Anlage der Stahlindustrie - konkret ist eine Walzstraße genannt - bei bekannter Betriebsweise der Anlage der Stahlindustrie mit guter Genauigkeit vorhergesagt werden kann.

Aus der US 8 288 888 B2 ist eine Elektrolyseanlage bekannt, die mit einem Windpark gekoppelt ist. Zusätzlich können weitere Lasten und weitere Energiequellen vorhanden sein. Die weiteren Lasten und Energiequellen können auch die Form von elektrischen Energiespeichern aufweisen. Der mittels der Elektrolyseanlage erzeugte Wasserstoff kann an ein angegliedertes Chemiewerk oder eine Raffinerie weitergeleitet werden.

### Zusammenfassung der Erfindung

In der Vergangenheit wurden bei der Ermittlung des Betriebs von Anlagen der Stahlindustrie zwar die hierbei anfallenden Kosten - auch die hierbei anfallenden Energiekosten - berücksichtigt. Die Berücksichtigung erfolgte jedoch nur in dem Sinne, dass der Gesamtbedarf an elektrischer Energie und die dadurch entstehenden Kosten für die elektrische Energie berücksichtigt wurden. Im Zuge der Hinwendung zu regenerativen Energien muss in erheblich stärkerem Ausmaß die Verfügbarkeit elektrischer Energie (einschließlich der zeitlichen Schwankungen der für die elektrische Energie anfallenden Kosten) berücksichtigt werden, da die Verfügbarkeit und damit auch die Kosten elektrischer Energie zukünftig deutlich größeren Schwankungen als in der Vergangenheit unterworfen sein wird.

Entscheidend für die effiziente Verwendung des elektrischen Energiespeichers im Rahmen der vorliegenden Erfindung sind zum einen der - erwartete - zukünftige Strombedarf der Anlage der Stahlindustrie und zum anderen der - erwartete - zukünftige Preis für aus dem Versorgungsnetz bezogene elektrische Energie.

In dem oben genannten Fachaufsatz ist zwar ausgeführt, dass die Anlage der Stahlindustrie und der elektrische Energiespeicher mittels eines intelligenten Energiemanagementsystems gesteuert und betrieben werden. Es finden sich jedoch keine näheren Ausführungen zur Implementierung des intelligenten Energiemanagementsystems.

Die Aufgabe der vorliegenden Erfindung besteht darin, Möglichkeiten zu schaffen, mittels derer ein kosteneffizienter Betrieb eines Gesamtsystems erreicht wird, das als Teilsysteme eine Anlage der Stahlindustrie und einen elektrischen Energiespeicher umfasst.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird ein Betriebsverfahren der eingangs genannten Art dadurch ausgestaltet, dass
- wobei einer das Gesamtsystem steuernden Steuereinrichtung aktuelle Zustände der Teilsysteme bekannt sind,
- wobei der Steuereinrichtung, bezogen auf einen ersten Zeithorizont, ein geplanter erster Bezug an elektrischer Energie aus dem Versorgungsnetz und geplante erste Betriebsweisen der weiteren Teilsysteme bekannt sind,
- wobei die Steuereinrichtung basierend auf dem geplanten ersten Bezug und den geplanten ersten Betriebsweisen einen auf das Ende des ersten Zeithorizonts bezogenen erwarteten Endzustand des elektrischen Energiespeichers ermittelt,
- wobei die Steuereinrichtung unter Berücksichtigung des erwarteten Endzustands des elektrischen Energiespeichers und der Steuereinrichtung bekannter, für einen sich an den ersten Zeithorizont unmittelbar anschließenden zweiten Zeithorizont geplanter zweiter Betriebsweisen der weiteren Teilsysteme einen geplanten zweiten Bezug an elektrischer Energie festlegt,
- wobei die Steuereinrichtung die weiteren Teilsysteme während des ersten und zweiten Zeithorizonts basierend auf den geplanten ersten und zweiten Betriebsweisen betreibt und aus dem Versorgungsnetz während des ersten und zweiten Zeithorizonts gemäß des geplanten ersten Bezugs und des festgelegten zweiten Bezugs an elektrischer Energie elektrische Energie bezieht.

Der Begriff "Teilsysteme" umfasst, wenn er ohne weitere Zusätze verwendet wird, sowohl vorstehend als auch nachstehend alle Teilsysteme, also auch den elektrischen Energiespeicher. Der Begriff "weitere Teilsysteme" umfasst hingegen nicht den elektrischen Energiespeicher, sondern nur die anderen Teilsysteme. Der erste Zeithorizont kann beispielsweise bei 24 Stunden liegen. Der zweite Zeithorizont ist in der Regel erheblich kürzer als der erste Zeithorizont. Er kann beispielsweise bei 1 Stunde oder bei einigen wenigen Stunden liegen. Die genannten Werte sind typisch. Die vorliegende Erfindung ist jedoch nicht auf die genannten Werte für die beiden Zeithorizonte beschränkt.

Es ist möglich, dass die Steuereinrichtung vor der aktuellen Ausführung des Betriebsverfahrens für den ersten Zeithorizont zunächst den geplanten ersten Bezug an elektrischer Energie aus dem Versorgungsnetz festlegt und dann basierend auf dem geplanten ersten Bezug an elektrischer Energie die geplanten ersten Betriebsweisen der verschiedenen weiteren Teilsysteme festlegt. Alternativ ist die umgekehrte Vorgehensweise möglich. Wiederum alternativ ist es möglich, dass die geplanten ersten Betriebsweisen der weiteren Teilsysteme der Steuereinrichtung zuerst bekannt sind (beispielsweise weil sie der Steuereinrichtung vorgegeben werden oder von der Steuereinrichtung ermittelt werden) und die Steuereinrichtung sodann den geplanten ersten Bezug an elektrischer Energie anhand der geplanten ersten Betriebsweisen ermittelt. In jedem Fall aber ist die geplante Betriebsweise des elektrischen Energiespeichers eine aus dem festgelegten Bezug an elektrischer Energie und der zugehörigen geplanten ersten Betriebsweisen der weiteren Teilsysteme abgeleitete Betriebsweise. Der elektrische Energiespeicher ist sozusagen der Sklave, der auf seine Herren hört, wobei die Herren die weiteren Teilsysteme und der festgelegte Bezug elektrischer Energie aus dem Versorgungsnetz sind.

Die vorliegende Erfindung beruht auf dem Sachverhalt, dass der erwartete Preis für aus dem Versorgungsnetz bezogene elektrische Energie für verschiedene Zeiträume auf jeweils individuell verschiedene Art und Weise festgelegt werden kann. An einem Spotmarkt steht der Preis oftmals nur für einen relativ begrenzten Zeitraum fest, beispielsweise nur 24 Stunden im Voraus. Hier werden bestimmte Strommengen für feste Zeiträume zu einem jeweiligen Spotmarktpreis gehandelt.

Wird beim späteren Betrieb des Gesamtsystems - also beispielsweise 24 Stunden nach dem Kauf bestimmter Mengen an elektrischer Energie - die zuvor gekaufte Menge an elektrischer Energie bezogen, wird auch der vereinbarte Tarif abgerechnet. Wird hingegen mehr oder weniger elektrischer Energie bezogen, hängt der tatsächliche Preis für aus dem Versorgungsnetz bezogene elektrische Energie von einer Vielzahl von Faktoren ab. In den tatsächlichen Preis geht insbesondere ein, ob und gegebenenfalls mit welchem Aufwand zusätzlich bezogene elektrische Energie vom Betreiber des Versorgungsnetzes beschafft werden musste oder ob und gegebenenfalls mit welchem Aufwand von dem Betreiber des Versorgungsnetzes gekaufte, aber nicht bezogene elektrische Energie anderweitig verwertet werden konnte. Dies schafft in erheblichem Umfang Unsicherheiten für den Betreiber des Gesamtsystems. Erheblich zuverlässiger wäre es, wenn gewährleistet werden könnte, dass beim späteren Betrieb des Gesamtsystems aus dem Versorgungsnetz auch tatsächlich die zuvor gekaufte Menge an elektrischer Energie - nicht mehr und nicht weniger - bezogen wird. Genau dies wird durch die erfindungsgemäße Vorgehensweise gewährleistet.

Die aktuellen Zustände der Teilsysteme können nach Bedarf definiert sein. Sie können insbesondere "normale" Betriebszustände, Betriebsgrenzen und Verschleißzustände umfassen.

Konkret für den elektrischen Energiespeicher umfasst der aktuelle Zustand insbesondere, in welchem Umfang (prozentual und/oder absolut) der Energiespeicher geladen ist und welche Temperatur Speicherzellen des Energiespeichers aufweisen. Weiterhin kann der Energiespeicherzustand auch umfassen, in welchem Verschleißzustand sich der Energiespeicher oder Teile des Energiespeichers befinden. Der Energiespeicherzustand kann weiterhin prinzipiell maximal mögliche und momentan maximal mögliche Betriebsgrößen umfassen, beispielsweise Lade- und Entladeströme. In analoger Weise gilt dies auch für den tatsächlichen und den erwarteten Endzustand des elektrischen Energiespeichers am Ende des ersten Zeithorizonts. Vorzugsweise ist vorgesehen, dass die Steuereinrichtung zum Festlegen des geplanten zweiten Bezugs an elektrischer Energie
- basierend auf den geplanten zweiten Betriebsweisen einen Bedarf an elektrischer Energie für den Betrieb der weiteren Teilsysteme während des zweiten Zeithorizonts ermittelt und
- den zweiten Bezug an elektrischer Energie aus dem Versorgungsnetz während des zweiten Zeithorizonts unter Berücksichtigung des Bedarfs an elektrischer Energie für den Betrieb der weiteren Teilsysteme während des zweiten Zeithorizonts und des erwarteten Endzustands des elektrischen Energiespeichers und eines für das Ende des zweiten Zeithorizonts gewünschten Sollzustands des elektrischen Energiespeichers festlegt.

Dadurch gestaltet sich die Ermittlung des geplanten zweiten Bezugs an elektrischer Energie besonders einfach. Die geplanten zweiten Betriebsweisen können der Steuereinrichtung vorgegeben werden. Alternativ können sie von der Steuereinrichtung eigenständig ermittelt werden, beispielsweise im Rahmen einer Optimierung.

Alternativ ist vorgesehen, dass die Steuereinrichtung zum Festlegen des geplanten zweiten Bezugs an elektrischer Energie
- über das Internet an einer Energiebörse für eine Anzahl von Abschnitten des zweiten Zeithorizonts jeweils eine Anzahl an Anforderungen für den Bezug jeweiliger Mengen an elektrischer Energie abgibt, wobei den Anforderungen jeweilige Bedingungen zugeordnet sind,
- prüft, ob und gegebenenfalls für welche der Anforderungen der angeforderte Bezug an elektrischer Energie unter Erfüllung der jeweils zugeordneten Bedingungen von der Energiebörse zugesagt wird, und
- sodann für den jeweiligen Abschnitt diejenigen Anforderungen, bei denen der gewünschte Bezug an elektrischer Energie unter Erfüllung der jeweils zugeordneten Bedingungen von der Energiebörse zugesagt wird, als zweiten Bezug an elektrischer Energie übernimmt.

Beispielsweise kann die Steuereinrichtung an der Energiebörse drei Anforderungen abgeben, also eine erste Anforderung, eine zweite Anforderung und eine dritte Anforderung. In den Anforderungen wird eine jeweilige Menge an elektrischer Energie zu einem jeweiligen Maximalpreis angefordert. Die Steuereinrichtung übernimmt dann die zugesagten Anforderungen (beispielsweise die zweite und die dritte Anforderung, genauer die Summe von deren Mengen an elektrischer Energie) als zweiten Bezug an elektrischer Energie. Die Anzahl an Bezugswünschen kann natürlich auch größer oder kleiner sein.

In aller Regel berücksichtigt die Steuereinrichtung bei der Festlegung der Anforderungen den erwarteten Endzustand des elektrischen Energiespeichers und/oder Betriebsgrenzen des elektrischen Energiespeichers. Beispielsweise kann die Steuereinrichtung einen minimalen und einen maximalen Ladezustand des elektrischen Energiespeichers, Temperaturen von Zellen des Energiespeichers, eine maximale Laderate oder Entladerate, einen vom jeweiligen Betriebszustand abhängigen auftretenden Verschleiß und andere mehr berücksichtigen.

Alternativ oder zusätzlich - in der Regel zusätzlich - kann die Steuereinrichtung auch eine über den zweiten Zeithorizont hinausreichende erwartete Verfügbarkeit an elektrischer Energie berücksichtigen. In diesem Fall nimmt die Steuereinrichtung die erwartete Verfügbarkeit entgegen oder ermittelt sie aufgrund historischer Daten über die erwartete Verfügbarkeit und/oder einer Wettervorhersage.

Vorzugsweise ist vorgesehen, dass die Steuereinrichtung
- während des ersten Zeithorizonts prüft, ob trotz unberücksichtigter Sachverhalte während des verbleibenden Teils des ersten Zeithorizonts Betriebsgrenzen des elektrischen Energiespeichers eingehalten werden,
- in dem Fall, dass die Betriebsgrenzen eingehalten werden, den geplanten ersten Bezug an elektrischer Energie beibehält und
- in dem Fall, dass die Betriebsgrenzen nicht eingehalten werden, die geplanten ersten Betriebsweisen und/oder den geplanten ersten Bezug an elektrischer Energie derart abändert, dass die Betriebsgrenzen des elektrischen Energiespeichers eingehalten werden.

Mögliche unberücksichtigte Sachverhalte sind beispielsweise kurzfristige Änderungen der ersten Betriebsweisen. Der Grund für derartige kurzfristige Änderungen können beispielsweise Störungen in den weiteren Teilsystemen sein. Ein anderer möglicher Grund kann sein, dass das Gesamtsystem regenerative Energieerzeuger aufweist (beispielsweise eine Windkraftanlage und/oder eine Photovoltaikanlage) und deren Erzeugung an regenerativer Energie von vorherigen Annahmen abweicht. Ein weiterer unberücksichtigter Sachverhalt sind Störungen des elektrischen Energiespeichers selbst.

Im Ergebnis werden also unter Umständen die geplanten ersten Betriebsweisen und/oder der geplante erste Bezug an elektrischer Energie auch während des ersten Zeithorizonts noch geändert. Dies erfolgt aber nur dann, wenn dies unumgänglich ist.

Oftmals umfasst das Gesamtsystem als weiteres Teilsystem eine Elektrolyseanlage. In diesem Fall ist die Elektrolyseanlage zur Übertragung elektrischer Energie direkt oder indirekt mit der Anlage der Stahlindustrie, dem elektrischen Energiespeicher und dem elektrischen Versorgungsnetz verbunden. Weiterhin umfassen in diesem Fall die aktuellen Zustände einen aktuellen Zustand der Elektrolyseanlage und umfassen die geplanten ersten und zweiten Betriebsweisen eine jeweilige Betriebsweise für die Elektrolyseanlage.

Die Aufgabe wird weiterhin durch ein Steuerprogramm mit den Merkmalen des Anspruchs 8 gelöst. Erfindungsgemäß bewirkt die Abarbeitung des Maschinencodes durch die Steuereinrichtung, dass die Steuereinrichtung das Gesamtsystem gemäß einem erfindungsgemäßen Betriebsverfahren steuert.

Die Aufgabe wird weiterhin durch eine Steuereinrichtung mit den Merkmalen des Anspruchs 9 gelöst. Erfindungsgemäß ist die Steuereinrichtung mit einem erfindungsgemäßen Steuerprogramm programmiert, so dass die Steuereinrichtung bei Abarbeitung des Maschinencodes des Steuerprogramms das Gesamtsystem gemäß einem erfindungsgemäßen Betriebsverfahren steuert.

Die Aufgabe wird weiterhin durch ein Gesamtsystem mit den Merkmalen des Anspruchs 10 gelöst. Erfindungsgemäß ist vorgesehen, dass die Steuereinrichtung als erfindungsgemäße Steuereinrichtung ausgebildet ist, die bei Abarbeitung des Maschinencodes des Steuerprogramms das Gesamtsystem gemäß einem erfindungsgemäßen Betriebsverfahren steuert.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: ein Gesamtsystem,
- FIG 2: ein Ablaufdiagramm,
- FIG 3: einen Zeitstrahl,
- FIG 4: ein Ablaufdiagramm,
- FIG 5: eine Kommunikationsstruktur,
- FIG 6: ein Ablaufdiagramm und
- FIG 7: ein weiteres Ablaufdiagramm.

### Beschreibung der Ausführungsformen

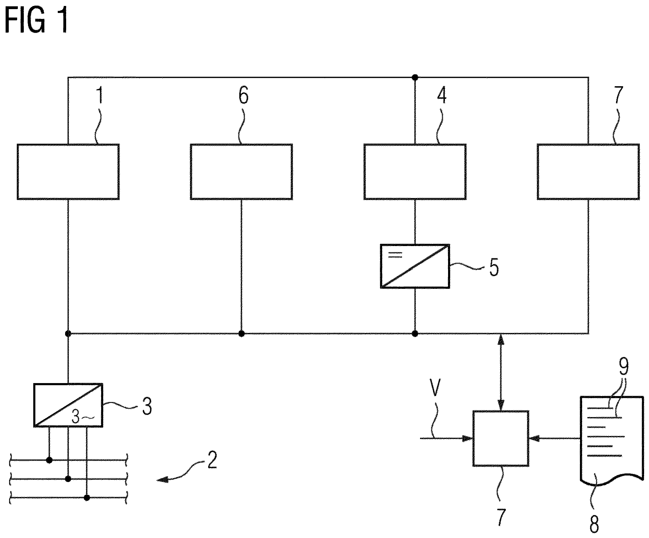

Gemäß FIG 1 umfasst ein Gesamtsystem eine Anlage 1 der Stahlindustrie. Die Anlage 1 kann mehrere Komponenten aufweisen. Beispiele derartiger Anlagen 1 sind Komponenten, die einer Gießeinrichtung technologisch vorgeordnet sind. Beispiele derartiger Komponenten sind eine eisenerzeugende Komponente (beispielsweise eine DRI-Anlage), ein Lichtbogenofen, ein Konverter und eine Pfannenanlage. Eine andere mögliche Anlage 1 ist eine Warmbandstraße. Diese Anlage ist einer Gießeinrichtung technologisch nachgeordnet.

Die Anlage 1 verbraucht in ihrem Betrieb elektrische Energie. Die Anlage 1 kann die elektrische Energie aus einem elektrischen Versorgungsnetz 2 beziehen, mit dem die Anlage 1 direkt (nicht dargestellt) oder indirekt (beispielsweise über einen Umrichter 3) verbunden ist. Das Versorgungsnetz 2 ist üblicherweise ein Drehstromnetz und damit ein mehrphasiges Versorgungsnetz. Das Drehstromnetz wird oftmals mit einer Mittelspannung im Bereich von 20 kV bis 30 kV oder mit einer Hochspannung von 110 kV betrieben.

Das Gesamtsystem umfasst oftmals als weiteres Teilsystem eine Elektrolyseanlage 4. in Verbindung mit einer derartigen Ausgestaltung wird die Erfindung nachstehend erläutert. Die Elektrolyseanlage 4 ist jedoch nicht zwingend erforderlich. Wenn sie nicht vorhanden ist, entfallen nachstehend alle Sachverhalte, die auf die Elektrolyseanlage 4 bezogen sind.

Auch die Elektrolyseanlage 4 verbraucht in ihrem Betrieb elektrische Energie. Die Elektrolyseanlage 4 ist daher ebenfalls mit dem Versorgungsnetz 2 verbunden. Die Elektrolyseanlage 4 benötigt für ihren Betrieb eine Gleichspannung. Der Elektrolyseanlage 4 ist daher üblicherweise ein Gleichrichter 5 vorgeordnet, so dass nur eine indirekte Verbindung mit dem Versorgungsnetz 2 besteht.

In manchen Fällen benötigt die Anlage 1 für ihren Betrieb Wasserstoff. In diesem Fall sind die Anlage 1 und die Elektrolyseanlage 4 entsprechend der Darstellung in FIG 1 zum Transfer von Wasserstoff direkt oder indirekt miteinander verbunden. Etwaige Pumpen, Ventile und dergleichen sind in FIG 1 nicht mit dargestellt.

Das Gesamtsystem umfasst als Teilsystem weiterhin einen elektrischen Energiespeicher 6. Der Energiespeicher 6 ist zumindest zum Aufnehmen von elektrischer Energie, eventuell auch zum Abgeben von elektrischer Energie, direkt oder indirekt mit dem Versorgungsnetz 2 verbunden. Der Energiespeicher 6 ist weiterhin zum Abgeben elektrischer Energie mit der Anlage 1 und der Elektrolyseanlage 4 verbunden. Nimmt der Energiespeicher 6 elektrische Energie auf, wird sie stets aus dem Versorgungsnetz 2 bezogen. Gibt der Energiespeicher 6 elektrische Energie ab, wird sie primär zur Deckung des Bedarfs der Anlage 1 und der Elektrolyseanlage 4 und nur sekundär zur Einspeisung in das Versorgungsnetz 2 verwendet. Im Ergebnis kann somit - je nachdem, ob die vom Energiespeicher 6 abgegebene elektrische Energie größer oder kleiner als die von der Anlage 1 und Elektrolyseanlage 4 verbrauchte elektrische Energie ist - temporär elektrische Energie in das Versorgungsnetz 2 eingespeist oder aus dem Versorgungsnetz 2 bezogen werden.

Es muss einstellbar sein, ob und in welchem Umfang dem Energiespeicher 6 elektrische Energie zugeführt wird bzw. ob und in welchem Umfang der elektrische Energiespeicher 6 elektrische Energie abgibt. Zu diesem Zweck ist in der Regel eine bidirektional betreibbare Umrichtereinheit vorhanden. Diese Umrichtereinheit ist in FIG 1 nicht mit dargestellt. Sie wird vielmehr als Bestandteil des Energiespeichers 6 angesehen.

Die genaue Art und Weise der elektrischen Verbindung der Anlage 1, der Elektrolyseanlage 4 und des Energiespeichers 6 untereinander und mit dem Versorgungsnetz 2 ist von untergeordneter Bedeutung. Insbesondere können den verschiedenen Teilsystemen 1, 4 und 6 nach Bedarf Gleichrichter 5, Wechselrichter und sonstige Umrichter 3 zugeordnet sein. Es sollte jedoch gewährleistet sein, dass ein Transfer elektrischer Energie vom Energiespeicher 6 zu der Anlage 1 und der Elektrolyseanlage 4 ohne Umweg über das Versorgungsnetz 2 möglich ist.

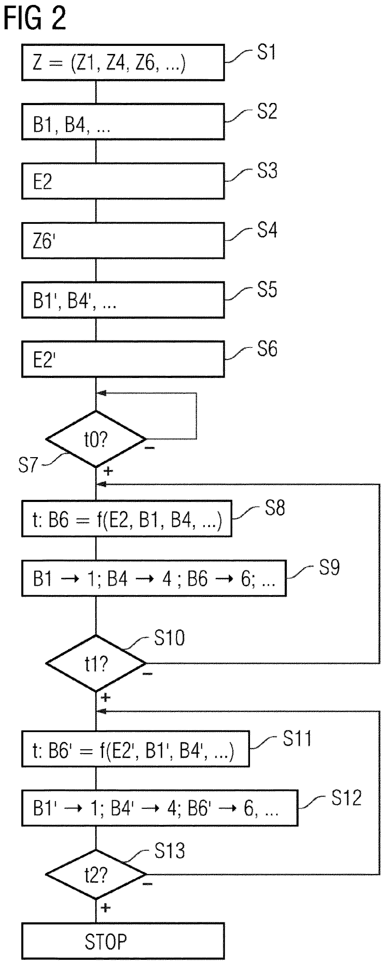

Das Gesamtsystem umfasst weiterhin eine Steuereinrichtung 7. Die Steuereinrichtung 7 ist mit einem Steuerprogramm 8 programmiert. Das Steuerprogramm 8 umfasst Maschinencode 9, der von der Steuereinrichtung 7 abarbeitbar ist. Aufgrund der Programmierung mit dem Steuerprogramm 8 arbeitet die Steuereinrichtung 7 den Maschinencode 9 ab. Die Abarbeitung des Maschinencodes 9 durch die Steuereinrichtung 7 bewirkt, dass die Steuereinrichtung 7 das Gesamtsystem gemäß einem Betriebsverfahren steuert, das nachstehend in Verbindung mit FIG 2 näher erläutert wird. Noch bevor das erfindungsgemäße Betriebsverfahren erläutert wird, wird jedoch darauf hingewiesen, dass die Steuereinrichtung 7 nachstehend zwar als einheitliche Steuereinrichtung 7 erläutert wird, die die Teilsysteme 1, 4 und 6 des Gesamtsystems gemeinsam steuert. Die Steuereinrichtung 7 kann jedoch ebenso für die Steuerung der Teilsysteme 1, 4 und 6 jeweils eine eigene Teil-Steuereinrichtung aufweisen. In diesem Fall müssen zwischen den Teil-Steuereinrichtungen ein entsprechender Informationsaustausch und eine entsprechende Abstimmung bzw. Koordination erfolgen.

Nachfolgend wird weiterhin zwischen dem elektrischen Energiespeicher 6 einerseits und den weiteren Teilsystemen 1, 4 unterschieden. Die "weiteren Teilsysteme" umfassen nur die Anlage der Grundstoffindustrie 1 und gegebenenfalls die Elektrolyseanlage 4, aber nicht den elektrischen Energiespeicher 6. Wenn hingegen der Begriff "Teilsysteme" ohne den Zusatz "weitere" verwendet wird, sind alle Teilsysteme gemeint, also nicht nur die Anlage der Grundstoffindustrie 1 und gegebenenfalls die Elektrolyseanlage 4, sondern auch der elektrische Energiespeicher 6.

Gemäß FIG 2 wird der Steuereinrichtung 8 in einem Schritt S1 ein aktueller Zustand Z des Gesamtsystems bekannt. Der aktuelle Zustand Z umfasst für die Teilsysteme 1, 4, 6, 7 jeweils einen aktuellen Teilzustand Z1, Z4, Z6. Die Ziffer des jeweiligen aktuellen Teilzustands Z1, Z4, Z6 stimmt mit dem Bezugszeichen des jeweiligen Teilsystems 1, 4, 6 überein.

Beispielsweise kann der Teilzustand Z1 - das Vorhandensein entsprechender Komponenten der Anlage 1 vorausgesetzt - folgende Größen umfassen:
- den Produktionsfortschritt einer eisenerzeugenden Anlage,
- den Produktionsfortschritt eines Lichtbogenofens,
- einen Prozesszustand einer Stranggießmaschine,
- eine Temperatur eines einem Walzwerk vorgeordneten Ofens,
- Verschleißzustände von Arbeitswalzen von Walzgerüsten des Walzwerks,
- ob in den Walzgerüsten des Walzwerks gerade Walzstiche ausgeführt werden.

Der Teilzustand Z1 kann weiterhin umfassen, welche Materialien sich in welchem Zustand momentan in der Anlage 1 befinden. Beispielsweise kann der Teilzustand Z1 - das Vorhandensein entsprechender Materialien in entsprechenden Komponenten der Anlage 1 vorausgesetzt - folgende Größen umfassen:
- Menge und Zustand einer Charge in einem Lichtbogenofen oder in einer Pfanne,
- Zeitdauern, für welche sich Walzgüter bereits in einem Ofen befinden,
- Temperaturen der Walzgüter.

Der Teilzustand Z4 kann beispielsweise eine Temperatur und eine chemische Zusammensetzung der Elektrolyseflüssigkeit der Elektrolyseanlage 4 und einen Verschleißzustand der Elektrolyseanlage 4 umfassen.

Der Teilzustand Z6 umfasst zumindest den Ladezustand des Energiespeichers 6, also das Ausmaß, zu dem der Energiespeicher 6 geladen ist. Der Teilzustand Z6 kann auch weitere Größen umfassen, beispielsweise eine Temperatur des Energiespeichers 6 oder einen maximal möglichen oder zulässigen Lade- und Entladestrom. Weiterhin kann der Teilzustand Z6 einen Verschleißzustand des Energiespeichers 6 umfassen.

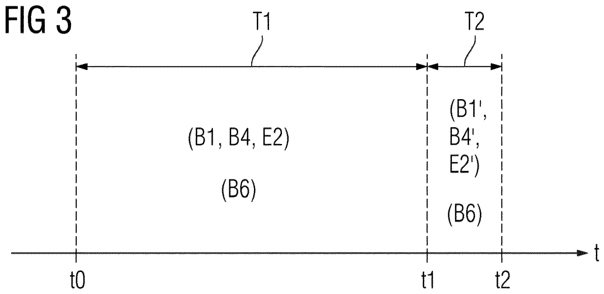

In einem Schritt S2 werden der Steuereinrichtung 8 geplante erste Betriebsweisen B1, B4 der weiteren Teilsysteme 1, 4 bekannt. Die genannten Betriebsweisen B1, B4 sind gemäß FIG 3 auf einen ersten Zeithorizont T1 bezogen. Der erste Zeithorizont T1 erstreckt sich gemäß FIG 3 über einen nennenswerten Zeitraum, beispielsweise über 20 Stunden, 22 Stunden, 24 Stunden oder 26 Stunden. Natürlich sind auch andere Zeiträume möglich. In einem Schritt S3 wird der Steuereinrichtung 7 für den ersten Zeithorizont T1 weiterhin ein geplanter erster Bezug E2 an elektrischer Energie aus dem Versorgungsnetz 2 bekannt. Die Zahl "2", mit welcher vorliegend der Buchstabe "E" ergänzt wurde, soll andeuten, dass der Bezug an elektrischer Energie aus dem Versorgungsnetz 2 erfolgt.

In einem Schritt S4 ermittelt die Steuereinrichtung 7 einen erwarteten Endzustand Z6' des elektrischen Energiespeichers 6. Der erwartete Endzustand Z6' ist auf das Ende des ersten Zeithorizonts T1 bezogen. Die Steuereinrichtung 7 ermittelt den erwarteten Endzustand Z6' basierend auf dem geplanten ersten Bezug E2 und den geplanten ersten Betriebsweisen B1, B4. In der Regel ermittelt die Steuereinrichtung 7 im Schritt S4 auch die erwarteten Endzustände der weiteren Teilsysteme 1, 4. Dies ist im Rahmen der vorliegenden Erfindung jedoch von untergeordneter Bedeutung.

In einem Schritt S5 werden der Steuereinrichtung 7 geplante zweite Betriebsweisen B1', B4' der weiteren Teilsysteme 1, 4 bekannt. Die geplanten zweiten Betriebsweisen B1', B4' sind - siehe FIG 3 - auf einen zweiten Zeithorizont T2 bezogen, der sich an den ersten Zeithorizont T1 unmittelbar anschließt. Der zweite Zeithorizont T2 ist in der Regel erheblich kleiner als der erste Zeithorizont T1. Beispielsweise kann der zweite Zeithorizont T2 bei 1 Stunde oder bei einigen wenigen Stunden liegen.

Die geplanten zweiten Betriebsweisen B1', B4' können der Steuereinrichtung 7 vorgegeben werden. Alternativ können sie, ausgehend von den Endzuständen der anderen Teilsysteme 1, 4 am Ende des ersten Zeithorizonts T1, von der Steuereinrichtung 7 beispielsweise gemäß einem Betriebsverfahren ermittelt werden, wie es detailliert in der älteren, nicht vorveröffentlichten Anmeldung "Kosteneffizienter Betrieb einer Anlage der Stahlindustrie und weiterer Teilsysteme eines Gesamtsystems" der Primetals Technologies Germany GmbH, amtliches Aktenzeichen 23 151 165.0, eingereicht am 11.01.2023 beim Europäischen Patentamt, erläutert ist.

In einem Schritt S6 legt die Steuereinrichtung 7 einen geplanten zweiten Bezug E2' an elektrischer Energie fest. Die Festlegung erfolgt unter Berücksichtigung des erwarteten Endzustands Z6' des elektrischen Energiespeichers 6 und der geplanten zweiten Betriebsweisen B1', B4'.

In einem Schritt S7 wartet die Steuereinrichtung 7 einen Zeitpunkt t0 ab, also den Beginn des ersten Zeithorizonts T1.

Ab dem Zeitpunkt t0 ermittelt die Steuereinrichtung 7 in einem Schritt S8 jeweils anhand der für den jeweiligen Zeitpunkt t geplanten ersten Betriebsweisen B1, B4 der weiteren Teilsysteme 1, 4 und des für den jeweiligen Zeitpunkt t geplanten ersten Bezugs E2 an elektrischer Energie die zugehörige Betriebsweise B6 des elektrischen Energiespeichers 6. Im Ergebnis gleicht der elektrische Energiespeicher 6 somit die Differenz zwischen dem elektrischen Energiebedarf der weiteren Teilsysteme 1, 4 einerseits und dem - festgelegten - ersten Bezug E2 an elektrischer Energie aus. Der Ausgleich erfolgt für jeden Zeitpunkt t oder zumindest für kleinere Zeiträume von typischerweise maximal 10 % des ersten Zeithorizonts T1. Meist sind die kleineren Zeiträume sogar kleiner der als zweite Zeithorizont T2. Beispielsweise können die kleineren Zeiträume bei jeweils 15 Minuten liegen.

In einem Schritt S9 steuert die Steuereinrichtung 7 für den jeweiligen Zeitpunkt t die Teilsysteme 1, 4, 6 entsprechend den für den jeweiligen Zeitpunkt t geplanten bzw. ermittelten Betriebsweisen B1, B4, B6 an, betreibt sie also gemäß diesen Betriebsweisen B1, B4, B6. Auch den Umrichter 3 steuert die Steuereinrichtung 7 an, und zwar so, dass aus dem Versorgungsnetz 2 elektrische Energie entsprechend dem geplanten ersten Bezug E2 an elektrischer Energie bezogen wird.

In einem Schritt S10 prüft die Steuereinrichtung 7, ob ein Zeitpunkt t1 erreicht ist, also das Ende des ersten Zeithorizonts T1. Ist dies nicht der Fall, geht die Steuereinrichtung 7 zum Schritt S8 zurück. Anderenfalls geht die Steuereinrichtung 7 zu einem Schritt S11 über.

Im Schritt S11 und damit ab dem Zeitpunkt t1 ermittelt die Steuereinrichtung 7 jeweils anhand der für den jeweiligen Zeitpunkt t geplanten zweiten Betriebsweisen B1', B4' der weiteren Teilsysteme 1, 4 und des für den jeweiligen Zeitpunkt t festgesetzten zweiten Bezugs E2' an elektrischer Energie die zugehörige Betriebsweise B6' des elektrischen Energiespeichers 6. Sodann steuert die Steuereinrichtung 7 in einem Schritt S12 für den jeweiligen Zeitpunkt t die Teilsysteme 1, 4, 6 entsprechend den für den jeweiligen Zeitpunkt t geplanten bzw. ermittelten Betriebsweisen B1', B4', B6' an. Auch den Umrichter 3 steuert die Steuereinrichtung 7 an, und zwar so, dass aus dem Versorgungsnetz 2 elektrische Energie entsprechend dem festgesetzten zweiten Bezug E2' an elektrischer Energie bezogen wird. Die Schritte S11 und S12 korrespondieren somit im Ergebnis mit Ausnahme des Umstands, dass sie auf einen anderen Zeitpunkt bezogen sind, inhaltlich mit den Schritten S8 und S9.

In einem Schritt S13 prüft die Steuereinrichtung 7, ob ein Zeitpunkt t2 erreicht ist, also das Ende des zweiten Zeithorizonts T2. Ist dies nicht der Fall, geht die Steuereinrichtung 7 zum Schritt S11 zurück. Anderenfalls ist die Vorgehensweise von FIG 2 beendet.

FIG 2 zeigt eine vereinfachte Vorgehensweise. Die reale Vorgehensweise ist etwas komplexer. Insbesondere erfolgt in der Realität eine rollierende Vorgehensweise. Die Schritte S1 bis S13 werden also immer wieder ausgeführt, wobei die Zeitpunkte t0, t1 und t2 immer wieder angepasst und nachgeführt werden, so dass insbesondere der zweite Zeithorizont T2 - gegebenenfalls mit geringen Schwankungen - stets gleich weit in der Zukunft liegt.

Wenn beispielsweise - ein typischer Fall - der erste Zeithorizont T1 bei 23 Stunden liegt und der zweite Zeithorizont T2 bei 1 Stunde liegt und mit einem Raster von 1 Stunden gearbeitet wird, liegt nach der erstmaligen Ausführung des erfindungsgemäßen Betriebsverfahrens die Betriebsweise des Gesamtsystems im Kern für 24 Stunden fest. Der Zeitraum, für den die Betriebsweise des Gesamtsystems feststeht, verringert sich nach und nach um 1 Stunde. Nach Ablauf dieser Stunde wird das Betriebsverfahren erneut ausgeführt, wobei die Betriebsweise des Gesamtsystems für die nunmehr 23. Stunde durch die vorherige Ausführung des erfindungsgemäßen Betriebsverfahrens festgelegt wurde und die Betriebsweise des Gesamtsystems für die nunmehr 24. Stunde neu festgelegt wird.

Für die Festlegung des geplanten zweiten Bezug E2' an elektrischer Energie, also die Implementierung des Schrittes S6, sind verschiedene Vorgehensweisen möglich.

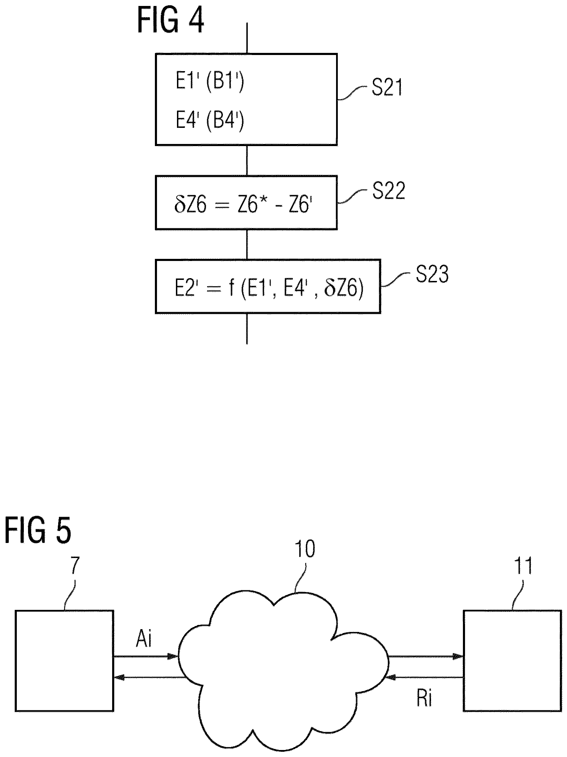

So ist es beispielsweise gemäß FIG 4 möglich, dass die Steuereinrichtung 7 zunächst in einem Schritt S21 basierend auf den geplanten zweiten Betriebsweisen B1', B4' für die weiteren Teilsysteme 1, 4 einen Bedarf an elektrischer Energie E1', E4' für den Betrieb der weiteren Teilsysteme 1, 4 während des zweiten Zeithorizonts T2 ermittelt. Weiterhin kann die Steuereinrichtung 7 in einem Schritt S22 eine Differenz δZ6 des erwarteten Endzustands Z6' des elektrischen Energiespeichers 6 und eines für das Ende des zweiten Zeithorizonts T2 gewünschten Sollzustands Z6* des elektrischen Energiespeichers 6 ermitteln, insbesondere eine Differenz der entsprechenden Ladezustände. In einem Schritt S23 kann die Steuereinrichtung 7 schließlich den zweiten Bezug E2' an elektrischer Energie aus dem Versorgungsnetz 2 während des zweiten Zeithorizonts T2 unter Berücksichtigung der in den Schritten S21 und S22 ermittelten Werte festlegen. Im einfachsten Fall kann die Steuereinrichtung 7 schlichtweg die Summe bilden.

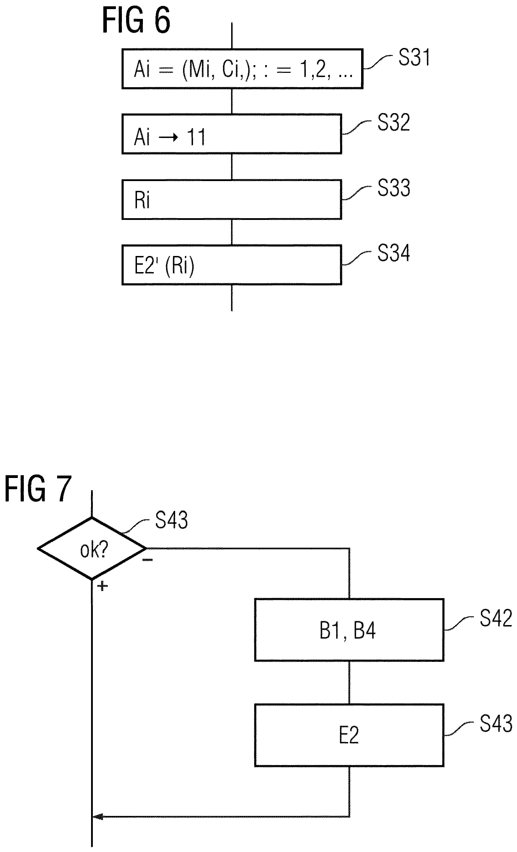

Alternativ oder zusätzlich kann die Steuereinrichtung 7 entsprechend der Darstellung in FIG 5 über das Internet 10 mit einer Energiebörse 11 verbunden sein. In diesem Fall kann die Steuereinrichtung 7 entsprechend der Darstellung in FIG 6 in einem Schritt S31 für eine Anzahl von Abschnitten des zweiten Zeithorizonts T2 (beispielsweise bei einer Länge des zweiten Zeitabschnitts T2 von 1 Stunde für vier Abschnitte von jeweils einer Stunde) jeweils eine Anzahl an Anforderungen Ai (mit i = 1, 2, 3 usw.) für den Bezug an elektrischer Energie aus dem Versorgungsnetz 2 ermitteln. Die Anforderungen Ai umfassen jeweils eine gewünschte Menge Mi an elektrischer Energie und jeweilige Bedingungen Ci, beispielsweise einen gewünschten Maximalpreis. In der Regel sind die Anforderungen Ai gestaffelt, d.h. sie unterscheiden sich zumindest im jeweils zugeordneten gebotenen Maximalpreis. Die jeweils angeforderten Mengen Mi an elektrischer Energie sind in der Regel ebenfalls voneinander verschieden, können aber im Einzelfall auch gleich sein.

In der Regel berücksichtigt die Steuereinrichtung 7 bei der Festlegung der Anforderungen Ai den erwarteten Endzustand Z6' des elektrischen Energiespeichers 6 und/oder Betriebsgrenzen des elektrischen Energiespeichers 6. Wenn beispielsweise damit gerechnet werden muss, dass der elektrische Energiespeicher 6 am Ende des ersten Zeithorizonts T1 nahezu leer ist, muss für den zweiten Zeithorizont T2 ein relativ großer Bezug E2' an elektrischer Energie gesichert werden, damit das Gesamtsystem zuverlässig weiter betrieben werden kann. In diesem Fall muss der Betreiber des Gesamtsystems bereit sein, einen relativ hohen Preis für die elektrische Energie zu zahlen. Wenn hingegen damit gerechnet werden kann, dass der elektrische Energiespeicher 6 am Ende des ersten Zeithorizonts T1 nahezu voll ist, muss für den zweiten Zeithorizont T2 nur ein relativ kleiner Bezug E2' an elektrischer Energie gesichert werden, damit das Gesamtsystem zuverlässig weiter betrieben werden kann. Für relativ große Mengen an elektrischer Energie kann daher ein sehr geringer Maximalpreis geboten werden.

In ähnlicher Weise kann die Steuereinrichtung 7 bei der Festlegung der Anforderungen Ai Betriebsgrenzen des elektrischen Energiespeichers 6 berücksichtigen. Wenn - beispielsweise - während des zweiten Zeithorizonts T2 der Ladezustand des elektrischen Energiespeichers 6 um maximal 30 % geändert werden kann, ist es nicht sinnvoll, eine Menge Mi an elektrischer Energie anzufordern, welche im Ergebnis eine Änderung des Ladezustands des elektrischen Energiespeichers 6 um mehr als 30 % bewirken würde.

Gegebenenfalls kann die Steuereinrichtung 7 bei der Festlegung der Anforderungen Ai auch eine erwartete Verfügbarkeit V (siehe FIG 1 an elektrischer Energie berücksichtigen, die für über den zweiten Zeithorizont T2 hinausreichende Zeiträume erwartet wird. Die erwartete Verfügbarkeit V kann der Steuereinrichtung 7 vorgegeben werden oder von der Steuereinrichtung 7 ermittelt werden. Die Ermittlung der erwarteten Verfügbarkeit V - die im Ergebnis eine Vermutung oder Abschätzung ist - kann die Steuereinrichtung 7 gegebenenfalls aufgrund historischer Daten über die erwartete Verfügbarkeit V, also im Ergebnis die tatsächliche Verfügbarkeit während vergleichbarer vergangener Zeiträume, und/oder einer Wettervorhersage vornehmen. Aufgrund der Berücksichtigung der erwarteten Verfügbarkeit V können beispielsweise - innerhalb gewisser Grenzen - Anforderungen Ai abgegeben werden, bei denen bestimmte Mengen Mi an elektrischer Energie mit geringeren Maximalpreisen kombiniert werden, wenn mit hinreichender Wahrscheinlichkeit damit gerechnet werden kann, dass die Preise für elektrische Energie kurz nach dem zweiten Zeithorizont T2 fallen. Es kann sozusagen etwas riskiert werden.

In einem Schritt S32 gibt die Steuereinrichtung 7 die von ihr ermittelten Anforderungen Ai an der Energiebörse 11 ab. In einem Schritt S33 nimmt die Steuereinrichtung 7 für die Anforderungen Ai Antworten Ri entgegen. Die Antworten Ri enthalten jeweils die Information, ob für die entsprechende Anforderung Ai der Bezug der angeforderten Menge Mi an elektrischer Energie unter Erfüllung der jeweils zugeordneten Bedingungen Ci von der Energiebörse 11 zugesagt wird oder nicht.

In einem Schritt S34 übernimmt die Steuereinrichtung 7 sodann diejenigen Anforderungen Ai, bei denen der Bezug der angeforderten Mengen Mi an elektrischer Energie unter Erfüllung der jeweils zugeordneten Bedingungen Ci von der Energiebörse 11 zugesagt wird, für den jeweiligen Abschnitt des zweiten Zeithorizonts T2 als zweiten Bezug E2' an elektrischer Energie.

Die geplanten ersten Betriebsweisen B1, B4 sind Betriebsweisen, mit denen die entsprechenden Teilsysteme 1, 4 während des ersten Zeithorizonts T1 nach Möglichkeit betrieben werden. In der Praxis können bei der Festlegung der geplanten ersten Betriebsweisen B1, B4 jedoch nicht alle Sachverhalte vollständig berücksichtigt werden. Es bleiben stets gewisse Sachverhalte unberücksichtigt. Beispielsweise kann im Falle eines Walzwerks als Anlage 1 der Grundstoffindustrie ein Walzgut etwas wärmer oder etwas kälter als geplant sein, so dass Walzkräfte, Walzmomente und der zugehörige Bedarf an elektrischer Energie variieren.

Die Steuereinrichtung 7 prüft daher auch während des ersten Zeithorizonts T1 gemäß FIG 7 in einem Schritt S41, ob beim tatsächlichen Betrieb der weiteren Teilsysteme 1, 4 und auch beim Betrieb des elektrischen Energiespeichers 6 Betriebsgrenzen des elektrischen Energiespeichers 6 (beispielsweise maximale Ströme oder ein minimaler oder ein maximaler Ladungszustand) während des verbleibenden Teils des ersten Zeithorizonts T1 eingehalten werden. Anders ausgedrückt: Die Planung wurde so vorgenommen, dass die Betriebsgrenzen eingehalten werden. Aufgrund der unberücksichtigten Sachverhalte erfolgt nunmehr jedoch ein anderer Betrieb des elektrischen Energiespeichers 6 als angenommen. Daher ist es nunmehr möglich, dass trotz der Planung und beispielsweise auch trotz der Berücksichtigung gewisser Reserven bei der Planung die Betriebsgrenzen des elektrischen Energiespeichers 6 nicht mehr eingehalten werden.

Ergibt die Prüfung des Schrittes S41, dass die Betriebsgrenzen eingehalten werden, ergreift die Steuereinrichtung 7, soweit es den geplanten ersten Bezug E2 an elektrischer Energie betrifft, keine weitergehenden Maßnahmen. Insbesondere behält sie den geplanten ersten Bezug E2 an elektrischer Energie unverändert bei. Ergibt die Prüfung des Schrittes S41 hingegen, dass die Betriebsgrenzen nicht eingehalten werden, ändert die Steuereinrichtung 7 in einem Schritt S42 die geplanten ersten Betriebsweisen B1, B4 - selbstverständlich nur für die Zukunft, vorliegend also den verbleibenden Teil des ersten Zeithorizonts T1 - ab. Beispielsweise kann eine Walzgeschwindigkeit angepasst werden oder kann eine Produktion an Wasserstoff angepasst werden. Alternativ oder zusätzlich ändert die Steuereinrichtung 7 in einem Schritt S43 den geplanten ersten Bezug E2 an elektrischer Energie ab, auch hier selbstverständlich nur für die Zukunft, vorliegend also den verbleibenden Teil des ersten Zeithorizonts T1. Beispielsweise kann die Steuereinrichtung 7 an der Energiebörse 11 für mindestens einen Teilbereich des verbleibenden Teils des ersten Zeithorizonts T1 direkt einen gewissen Bezug an elektrischer Energie nachkaufen oder zurückgeben. Sowohl beim Schritt S42 als auch beim Schritt S43 sind die ergriffenen Maßnahmen darauf gerichtet, dass die Betriebsgrenzen des elektrischen Energiespeichers 6 eingehalten werden. Der Schritt S3 kann analog zu den Vorgehensweisen der FIG 4 und 6 implementiert sein.

Vorliegend wurde eine Ausgestaltung erläutert, bei welcher das Gesamtsystem als Teilsysteme 1, 4, 6 ausschließlich die Anlage 1 der Grundstoffindustrie, die Elektrolyseanlage 4 und den elektrischen Energiespeicher 6 aufweist. Das Gesamtsystem kann jedoch auch noch andere Teilsysteme 12, 13 umfassen. Diese Teilsysteme 12, 13 sind, sofern sie vorhanden sind, weitere Teilsysteme im Sinne der vorliegenden Erfindung.

Beispielsweise kann das Gesamtsystem einen Wasserstoffspeicher 12 umfassen. Der Wasserstoffspeicher 12 kann als Speicher im engeren Sinne ausgebildet sein, also als dedizierter Wasserstoffspeicher. Auch das Leitungsnetz, über das Wasserstoff transportiert wird, weist jedoch eine gewisse Speicherkapazität auf und kann als Wasserstoffspeicher 12 dienen. Der Wasserstoffspeicher 12 ist, sofern er vorhanden ist, zum Aufnehmen von Wasserstoff direkt oder indirekt mit der Elektrolyseanlage 4 verbunden und zum Abgeben von Wasserstoff direkt oder indirekt mit der Anlage 1 verbunden. Aufgrund des Wasserstoffspeichers 12 sind der Betrieb der Anlage 1 und der Elektrolyseanlage 4 flexibler gestaltbar.

Sofern der Wasserstoffspeicher 12 vorhanden ist, ist es möglich, dass der von der Elektrolyseanlage 4 erzeugte Wasserstoff stets dem Wasserstoffspeicher 12 zugeführt wird und der von der Anlage 1 gegebenenfalls benötigte Wasserstoff stets von dem Wasserstoffspeicher 12 geliefert wird, so dass der Wasserstoffspeicher 12 sozusagen als Umschlagstation für den Wasserstoff dient. Es ist aber weiterhin auch eine direkte Verbindung der Anlage 1 und der Elektrolyseanlage 4 möglich.

Alternativ oder zusätzlich kann das Gesamtsystem eine Stromerzeugungseinrichtung 13 umfassen, beispielsweise eine Windenergieanlage oder eine Photovoltaikanlage. In diesem Fall ist die Stromerzeugungseinrichtung 13 zur Übertragung elektrischer Energie direkt oder indirekt mit den übrigen elektrische Energie aufnehmenden oder abgebenden Teilsystemen 1, 4, 6 und auch dem elektrischen Versorgungsnetz 2 verbunden. Ein für die Stromerzeugungseinrichtung 13 meist erforderlicher Umrichter kann als Bestandteil der Stromerzeugungseinrichtung 13 angesehen werden. Er ist in FIG 1 nicht mit dargestellt. Vorzugsweise ist die Zuführung elektrischer Energie von der Stromerzeugungseinrichtung 13 zu den Teilsystemen 1, 4, 6 ohne Umweg über das Versorgungsnetz 2 möglich.

Sofern der Wasserstoffspeicher 12 und/oder die Stromerzeugungseinrichtung 13 vorhanden sind, müssen die Vorgehensweisen der FIG 2, 4 und 6 um die Berücksichtigung der entsprechenden Anfangszustände, Betriebsweisen, Ansteuerung und Endzustände dieser beiden Teilsysteme 12, 13 erweitert und ergänzt werden.

Das Gesamtsystem kann zusätzlich auch noch andere weitere Teilsysteme umfassen. Dies ist in FIG 1 nicht dargestellt. Auch in diesem Fall müssen die Vorgehensweisen der FIG 2, 4 und 6 um die Berücksichtigung der entsprechenden Anfangszustände, Betriebsweisen, Ansteuerung und Endzustände dieser Teilsysteme erweitert und ergänzt werden.

Die vorliegende Erfindung weist viele Vorteile auf. Aufgrund der vorherigen Festlegung und späteren Realisierung des Bezugs E2' an elektrischer Energie aus dem Versorgungsnetz 2 sind die Kosten für die elektrische Energie zuverlässig bekannt. Insbesondere durch die Teilnahme an der Internetbörse 11 können die Kosten für die elektrische Energie sogar minimiert werden. Auch die Einbindung beispielsweise längerfristiger Bezugsverträge oder einer eigenen Stromerzeugungseinrichtung 13 ist ohne weiteres möglich.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Anlage
- 2: Versorgungsnetz
- 3: Umrichter
- 4: Elektrolyseanlage
- 5: Gleichrichter
- 6: Energiespeicher
- 7: Steuereinrichtung
- 8: Steuerprogramm
- 9: Maschinencode
- 10: Internet
- 11: Energiebörse
- 12: Wasserstoffspeicher
- 13: Stromerzeugungseinrichtung

- Ai: Anforderungen
- B1, B4, B6,: erste Betriebsweisen
- B 1', B4', B6': zweite Betriebsweisen
- Ci: Bedingungen
- E1', E4': Bedarfe an elektrischer Energie
- E2, E2': Bezüge an elektrischer Energie
- Mi: Mengen an elektrischer Energie
- Ri: Antworten
- S1 bis S43: Schritte
- T1, T2: Zeithorizonte
- t0, t1, t2: Zeitpunkte
- V: Verfügbarkeit
- Z1, Z4, Z6: aktuelle Zustände
- Z6': erwarteter Endzustand
- Z6*: Sollzustand

- δZ6: Differenz

## Patentansprüche

1. Betriebsverfahren für ein Gesamtsystem,
- wobei das Gesamtsystem als ein Teilsystem einen elektrischen Energiespeicher (6) und weitere Teilsysteme (1, 4) umfasst,
- wobei die weiteren Teilsysteme (1, 4) eine Anlage (1) der Stahlindustrie umfassen,
- wobei die Anlage (1) der Stahlindustrie und der elektrische Energiespeicher (6) zur Übertragung elektrischer Energie direkt oder indirekt miteinander und mit einem elektrischen Versorgungsnetz (2) verbunden sind,
- wobei einer das Gesamtsystem steuernden Steuereinrichtung (7) aktuelle Zustände (Z1, Z4, Z6) der Teilsysteme (1, 4, 6) bekannt sind,
- wobei der Steuereinrichtung (7), bezogen auf einen ersten Zeithorizont (T1), ein geplanter erster Bezug (E2) an elektrischer Energie aus dem Versorgungsnetz (2) und geplante erste Betriebsweisen (B1, B4) der weiteren Teilsysteme (1, 4) bekannt sind,
- wobei die Steuereinrichtung (7) basierend auf dem geplanten ersten Bezug (E2) und den geplanten ersten Betriebsweisen (B1, B4) einen auf das Ende des ersten Zeithorizonts (T1) bezogenen erwarteten Endzustand (Z6') des elektrischen Energiespeichers (6) ermittelt,
- wobei die Steuereinrichtung (7) unter Berücksichtigung des erwarteten Endzustands (Z6') des elektrischen Energiespeichers (6) und der Steuereinrichtung (7) bekannter, für einen sich an den ersten Zeithorizont (T1) unmittelbar anschließenden zweiten Zeithorizont (T2) geplanter zweiter Betriebsweisen (B1', B4') der weiteren Teilsysteme (1, 4) einen geplanten zweiten Bezug (E2') an elektrischer Energie festlegt,
- wobei die Steuereinrichtung (7) die weiteren Teilsysteme (1, 4) während des ersten und zweiten Zeithorizonts (T1, T2) basierend auf den geplanten ersten und zweiten Betriebsweisen (B1, B4, B1', B4') betreibt und aus dem Versorgungsnetz (2) während des ersten und zweiten Zeithorizonts (T1, T2) gemäß des geplanten ersten Bezugs (E2) und des festgelegten zweiten Bezugs (E2') an elektrischer Energie elektrische Energie bezieht.

2. Betriebsverfahren nach Anspruch 1,
**dadurch gekennzeichnet,**
**dass** die Steuereinrichtung (7) zum Festlegen des geplanten zweiten Bezugs (E2') an elektrischer Energie
- basierend auf den geplanten zweiten Betriebsweisen (B1', B4') einen Bedarf (E1', E4') an elektrischer Energie für den Betrieb der weiteren Teilsysteme (1, 4) während des zweiten Zeithorizonts (T2) ermittelt und
- den zweiten Bezug (E2') an elektrischer Energie aus dem Versorgungsnetz (2) während des zweiten Zeithorizonts (T2) unter Berücksichtigung des Bedarfs (E1', E4') an elektrischer Energie für den Betrieb der weiteren Teilsysteme (1, 4) während des zweiten Zeithorizonts (T2) und des erwarteten Endzustands (Z6') des elektrischen Energiespeichers (6) und eines für das Ende des zweiten Zeithorizonts (T2) gewünschten Sollzustands (Z6*) des elektrischen Energiespeichers (6) festlegt.

3. Betriebsverfahren nach Anspruch 1,
**dadurch gekennzeichnet,**
**dass** die Steuereinrichtung (7) zum Festlegen des geplanten zweiten Bezugs (E2') an elektrischer Energie
- über das Internet (10) an einer Energiebörse (11) für eine Anzahl von Abschnitten des zweiten Zeithorizonts T2 jeweils eine Anzahl an Anforderungen (Ai) für den Bezug jeweiliger Mengen (Mi) an elektrischer Energie abgibt, wobei den Anforderungen (Ai) jeweilige Bedingungen (Ci) zugeordnet sind,
- prüft, ob und gegebenenfalls für welche der Anforderungen (Ai) der angeforderte Bezug an elektrischer Energie unter Erfüllung der jeweils zugeordneten Bedingungen (Ci) von der Energiebörse (11) zugesagt wird, und
- sodann für den jeweiligen Abschnitt diejenigen Anforderungen (Ai), bei denen der gewünschte Bezug an elektrischer Energie unter Erfüllung der jeweils zugeordneten Bedingungen (Ci) von der Energiebörse (11) zugesagt wird, als zweiten Bezug (E2') an elektrischer Energie übernimmt.

4. Betriebsverfahren nach Anspruch 3,
**dadurch gekennzeichnet,**
**dass** die Steuereinrichtung (7) bei der Festlegung der Anforderungen (Ai) den erwarteten Endzustand (Z6') des elektrischen Energiespeichers (6) und/oder Betriebsgrenzen des elektrischen Energiespeichers (6) berücksichtigt.

5. Betriebsverfahren nach Anspruch 3 oder 4,
**dadurch gekennzeichnet,**
**dass** die Steuereinrichtung (7) bei der Festlegung der Anforderungen (Ai) eine über den zweiten Zeithorizont (T2) hinausreichende erwartete Verfügbarkeit (V) an elektrischer Energie berücksichtigt, wobei die Steuereinrichtung (7) die erwartete Verfügbarkeit (V) entgegennimmt oder aufgrund historischer Daten über die erwartete Verfügbarkeit (V) und/oder einer Wettervorhersage ermittelt.

6. Betriebsverfahren nach einem der obigen Ansprüche,
**dadurch gekennzeichnet,**
**dass** die Steuereinrichtung (7)
- während des ersten Zeithorizonts (T1) prüft, ob trotz unberücksichtigter Sachverhalte während des verbleibenden Teils des ersten Zeithorizonts (T1) Betriebsgrenzen des elektrischen Energiespeichers (6) eingehalten werden,
- in dem Fall, dass die Betriebsgrenzen eingehalten werden, den geplanten ersten Bezug (E2) an elektrischer Energie beibehält und
- in dem Fall, dass die Betriebsgrenzen nicht eingehalten werden, die geplanten ersten Betriebsweisen (B1, B4) und/oder den geplanten ersten Bezug (E2) an elektrischer Energie derart abändert, dass die Betriebsgrenzen des elektrischen Energiespeichers (6) eingehalten werden.

7. Betriebsverfahren nach einem der obigen Ansprüche,
**dadurch gekennzeichnet,**
- **dass** das Gesamtsystem als weiteres Teilsystem eine Elektrolyseanlage (4) umfasst,
- **dass** die Elektrolyseanlage (4) zur Übertragung elektrischer Energie direkt oder indirekt mit der Anlage (1) der Stahlindustrie, dem elektrischen Energiespeicher (6) und dem elektrischen Versorgungsnetz (2) verbunden ist,
- **dass** die aktuellen Zustände (Z1, Z4, Z6) einen aktuellen Zustand (Z4) der Elektrolyseanlage (4) umfassen und
- **dass** die geplanten ersten und zweiten Betriebsweisen (B1, B4) eine jeweilige Betriebsweise (B4, B4') für die Elektrolyseanlage (4) umfassen.

8. Steuerprogramm für eine Steuereinrichtung (7) für ein Gesamtsystem,
- wobei das Gesamtsystem als ein Teilsystem einen elektrischen Energiespeicher (6) und weitere Teilsysteme (1, 4) umfasst,
- wobei die weiteren Teilsysteme (1, 4) eine Anlage (1) der Stahlindustrie umfassen,
- wobei die Anlage (1) der Stahlindustrie und der elektrische Energiespeicher (6) zur Übertragung elektrischer Energie direkt oder indirekt miteinander und mit einem elektrischen Versorgungsnetz (2) verbunden sind,
- wobei das Steuerprogramm Maschinencode (9) umfasst, der von der Steuereinrichtung (7) abarbeitbar ist,
- wobei die Abarbeitung des Maschinencodes (9) durch die Steuereinrichtung (7) bewirkt, dass die Steuereinrichtung (7) das Gesamtsystem gemäß einem Betriebsverfahren nach einem der obigen Ansprüche steuert.

9. Steuereinrichtung für ein Gesamtsystem,
- wobei das Gesamtsystem als ein Teilsystem einen elektrischen Energiespeicher (6) und weitere Teilsysteme (1, 4) umfasst,
- wobei die weiteren Teilsysteme (1, 4) eine Anlage (1) der Stahlindustrie umfassen,
- wobei die Anlage (1) der Stahlindustrie und der elektrische Energiespeicher (6) zur Übertragung elektrischer Energie direkt oder indirekt miteinander und mit einem elektrischen Versorgungsnetz (2) verbunden sind,
- wobei die Steuereinrichtung mit einem Steuerprogramm (8) nach Anspruch 8 programmiert ist, so dass die Steuereinrichtung bei Abarbeitung des Maschinencodes (9) des Steuerprogramms (8) das Gesamtsystem gemäß einem Betriebsverfahren nach einem der Ansprüche 1 bis 7 steuert.

10. Gesamtsystem,
- wobei das Gesamtsystem als ein Teilsystem einen elektrischen Energiespeicher (6) und weitere Teilsysteme (1, 4) umfasst,
- wobei die weiteren Teilsysteme (1, 4) eine Anlage (1) der Stahlindustrie umfassen,
- wobei die Anlage (1) der Stahlindustrie und der elektrische Energiespeicher (6) zur Übertragung elektrischer Energie direkt oder indirekt miteinander und mit einem elektrischen Versorgungsnetz (2) verbunden sind,
- wobei das Gesamtsystem eine Steuereinrichtung (7) nach Anspruch 9 umfasst, die bei Abarbeitung des Maschinencodes (9) eines Steuerprogramms (8) von Anspruch 8 das Gesamtsystem gemäß einem Betriebsverfahren nach einem der Ansprüche 1 bis 7 steuert.
